(19)

**Europäisches Patentamt**

**European Patent Office**

**Office européen des brevets**

(11) **EP 4 579 180 A1**

(12) **EUROPEAN PATENT APPLICATION**

(43) Date of publication:
**02.07.2025 Bulletin 2025/27**

(21) Application number: **23220884.3**

(22) Date of filing: **31.12.2023**

(51) International Patent Classification (IPC):
**G01C 15/00** (2006.01)

(52) Cooperative Patent Classification (CPC):
**G01C 15/002**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Hilti Aktiengesellschaft
9494 Schaan (LI)**

(72) Inventors:
• **Gloor, Thomas
9495 Triesen (LI)**
• **Ichhaporia, Behroze
9470 Buchs (CH)**
• **Pfeifer, Juergen
88605 Sauldorf (DE)**

(74) Representative: **Hilti Aktiengesellschaft
Corporate Intellectual Property
Feldkircherstrasse 100
Postfach 333
9494 Schaan (LI)**

(54) **METHOD FOR DETERMINING AND VISUALIZING A LAYOUT AREA**

(57) A computer-implemented method for determining for a worksite, in which a surveying instrument is deployed at a station, a layout area, in which accuracies not larger than a predefined accuracy threshold can be achieved during operating the surveying instrument, the method being performed by a computer system and comprising the steps:

■ Computing a pose (POS-2) and corresponding variances and covariances for the station of the surveying instrument,

■ Computing the layout area based on the pose, the variances, measuring accuracies, and the accuracy threshold, and

■ Instructing a display to visualize a graphical representation (LAY-2) of the layout area.

FIG. 1

EP 4 579 180 A1

## Description

The present invention relates to a method for determining in a worksite a layout area according to the definition of claim 1, to a computer program according to the definition of claim 9, and to an apparatus according to the definition of claim 10.

## Background of the invention

Surveying instruments, such as total stations, are used in construction industries to take individual, highly accurate measurements within a worksite, using a highly precise electronic distance measuring device and highly accurate motors to rotate this electronic distance measuring device. Centered within a total station is its coordinate frame. The orientation of the coordinate frame is usually such that the stations x-axis pointing towards right, y-axis pointing towards the floor, and z-axis pointing into forward direction.

Known workflows to determine the pose (position and orientation) of a total station are based on manually or automatically taking measurement samples of distance and angle data in the worksite. Based on a scalable mathematical equation system, the pose can be calculated with a varying degree of precision, depending on the amount of sampling information considered. To solve the pose calculation, a minimum number of measurement samples needs to be taken, while an increasing number of measurement samples usually leads to the formation of an overdetermined mathematical equation system and an overall improved accuracy of the pose calculation.

The basic concept of surveying using a total station is that at an initial phase, a number of control points are positioned at scattered locations at the worksite to be surveyed. Typically, control points are materialized by prisms, cateyes, reflective foils, or other forms of reflective targets for returning the laser beam from the total station. The exact location of each control point is determined and logged in terms of coordinates on a specified coordinate frame, typically the coordinate frame of a floorplan of the worksite. A total station can then sight a number of these control points to determine its absolute position on that X, Y, Z coordinate frame using standard triangulation techniques.

In operation, the operator determines the distance and angle data successively for each control point. These data are stored in the total station's computer system together with the absolute position data for the respective control points, the latter position data being preloaded into the total station. The total station then implements an algorithm, generally known as a free-stationing algorithm, to determine its pose from the sightings of those control points. The positioning accuracy of a total station is inversely proportional to the square root of the number of control points it can exploit from its location, the angular distribution of those control points, as well as the stability of the worksite at which the control points and the total station are deployed.

Typically, the pose and its standard deviation are shown to the operator as numerical values and the interpretation of the quality is left to the operator and depends on his experience. To support the operator in the interpretation of the pose and its quality, Leica has released in November 2022 a new version v7.5 of their iCON Field software and included a functionality that shows to the operator a recommended working area that is a polygon created by the control points used for computing the pose. The disadvantage of the known functionality is that the working area is not evaluated based on an accuracy threshold that can be achieved during measuring and/or layouting with the total station.

## Summary of the invention

Therefore, what is desired is a method for determining a layout area, in which accuracies not larger than a predefined accuracy threshold can be achieved during measuring and/or layouting with a surveying instrument. An operator of the surveying instrument should be supported in the interpretation of the quality of the pose and in the accuracy, he can achieve during measuring and/or layouting with the surveying instrument.

These objectives are achieved by realizing the features of the independent claims. Features which further develop the invention in an advantageous manner are described in the dependent claims.

According to an aspect of the present invention, there is provided a computer-implemented method for determining for a worksite, in which a surveying instrument is deployed at a station, a layout area, in which accuracies not larger than a predefined accuracy threshold can be achieved during operating the surveying instrument, the method being performed by a computer system and comprising the steps:

- Computing a pose and corresponding variances and covariances for the station of the surveying instrument,
- Computing the layout area based on the pose, the variances, and covariances, measuring accuracies, and the accuracy threshold, and
- Instructing a display to visualize a graphical representation of the layout area.

The method for determining a layout area according to the present invention supports the operator of the surveying instrument in understanding the results he achieved during stationing of the surveying instrument. The layout area is computed by the computer system based on the pose, the variances and covariances for the station, based on measuring accuracies, and the predefined accuracy threshold. The operator is supported by a graphical representation of the layout area. The values represented by the layout area would normally be much harder for the operator to understand if presented numerically in a spreadsheet, especially if the data set is large or complex. The layout area enables operators to visualize data and understand it easily. The operator can easily check via the graphical representation if he can achieve the required accuracy during layouting or measuring with the surveying instrument at the worksite.

Preferably, the layout area is defined by a circular contour line having a center defined by

$$(E_S, N_S) + \frac{1}{c}\left(Q_{N_S,ori,} - Q_{E_S,ori}\right)$$ and a radius defined by

$$\sqrt{\frac{u^2}{c} - \frac{Q_{E_S,E_S} + Q_{N_S,N_S} + \sigma_{HD}^2}{c} + \frac{Q_{E_S,ori}^2 + Q_{N_S,ori}^2}{c^2}}$$ ,with $c = Q_{ori,ori} + \sigma_{HA}^2$ . The curves of equal accuracy are concentric circles having the same center, wherein the radius of the circles increases with increasing accuracy threshold.

The layout area can be defined as full circle, in which accuracies not larger than the accuracy threshold can be achieved during operating the surveying instrument, or the layout area can be an intersecting area of the full circle and a predefined working area, in which the surveying instrument is deployed. The inside of the contour line corresponds to the layout area, in which accuracies not larger than the accuracy threshold can be achieved, whereas at the outside of the contour line accuracies not larger than the accuracy threshold cannot be achieved.

Preferably, the layout area is related to the worksite and stored in the computer system and/or stored to a memory connected to the computer system and the layout area is provided for use in operating the surveying instrument. By providing the layout area for use in operating the surveying instrument, the operator is supported in the interpretation of the data, he can easily check via the graphical representation of the layout area if he can achieve the required accuracy.

Preferably, the layout area is provided for use in layouting a point of interest and upon selecting the point of interest, it is checked by the computer system whether the point of interest is located inside of the layout area or outside of the layout area, wherein:

- upon verification that the point of interest is located inside of the layout area, a predefined action is performed, the predefined action comprising generating a message stating that the point of interest is located inside of the layout area and/or that the accuracy threshold can be achieved, and
- upon verification that the point of interest is located outside of the layout area, a predefined action is performed, the predefined action comprising generating a message stating that the point of interest is not located inside of the layout area and/or that the accuracy threshold cannot be achieved.

By checking via the computer system whether a point of interest selected for layouting is located inside or outside of the layout area, the operator is supported in achieving the required accuracy.

In a preferred embodiment, the pose, and the corresponding variances and covariances are computed by a free-stationing algorithm based on a set of control points having known first coordinates in a first coordinate frame of the worksite and at least a sub-set of the set of control points having known second coordinates in a second coordinate frame of the surveying instrument.

Free-stationing algorithms are typically used to determine the pose, and corresponding variances and covariances of a surveying instrument in the first coordinate frame of the worksite. To compute the pose, at least two control points are required, the pose is computed from the first coordinates of the control points in the first coordinate frame and from the second coordinates in the second coordinate frame. The quality of the pose is proportional to the square root of the number of control points, the angular distribution of those control points, and the stability of the worksite at which the control points and the surveying instrument are deployed. The graphical representation of the layout area can support the operator in finding an appropriate selection of control points to determine the pose of the surveying instrument via a free-stationing algorithm.

Preferably, from the set of control points at least one further control point being different from the sub-set of control points is selected, second coordinates are determined for the at least one further control point by the surveying instrument in the second coordinate frame, and a new sub-set of control points containing the sub-set of control points and the at least one further control point is defined, the method further comprising:

- Computing a new pose and corresponding variances and covariances from the first coordinates and second coordinates of the new sub-set of control points,
- Computing a new layout area for the new sub-set of control points based on the new pose, the new variances and covariances, the measuring accuracies, and the at least one predefined accuracy, and

- Instructing the display to visualize a graphical representation of the new layout area.

By computing layout areas for different sub-sets of control points and visualizing those layout areas, the operator is supported in the interpretation of the data and the accuracy he can achieve during layouting and/or measuring with the surveying instrument. It is easy for the operator to identify the influence of a further control point on the layout area (location and/or size).

In a preferred embodiment, the at least one accuracy threshold comprises at least a first accuracy threshold and a second accuracy threshold different from the first accuracy threshold and in the step of computing the layout area, a first layout area is computed by the computer system for the first accuracy threshold and a second layout area is computed for the second accuracy threshold. By using a first accuracy threshold to compute a first layout area and a second accuracy threshold to compute a second layout area, the operator can be supported in the interpretation of different accuracies he can achieve during layouting and/or measuring with the surveying instrument.

Preferably, a first graphical representation of the first layout area is displayed, a second graphical representation of the second layout area is displayed, or the first graphical representation of the first layout area and the second graphical representation of the second layout area are displayed. During layouting with a surveying instrument at a worksite, at which the surveying instrument is deployed, different accuracies can be required.

According to a further aspect of the present invention, there is provided a computer program comprising instructions, which, when executed by a computer system, cause the computer system to carry out the method according to the present invention. The computer program may be stored on the computer system or on a computer-readable medium communicatively connected to the computer system. The term "computer-readable medium" includes, but is not limited to, portable or non-portable storage devices, optical storage devices, and various other mediums capable of storing, containing, or carrying instruction(s) and/or data.

According to a further aspect of the present invention, there is provided an apparatus comprising means for carrying out the method according to the present invention.

**Brief Description of the drawings**

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,

FIG. 1        shows an operator using a surveying instrument deployed at a worksite, the surveying instrument comprising a measuring unit mounted on a tripod and a remote controller connected via a communication link to the measuring unit,

FIGS. 2A, B   show an exemplary version of the measuring unit used in the surveying instrument of FIG. 1 (FIG. 2A) and a block diagram of the main components of the measuring unit as illustrated in FIG. 2A (FIG. 2B),

FIGS. 3A, B   show an exemplary version of the remote controller used in the surveying instrument of FIG. 1 (FIG. 3A) and a block diagram of the main components of the remote controller as illustrated in FIG. 3A (FIG. 3B),

FIG. 4        shows a method for determining a layout area according to the present invention in a flow chart,

FIGS. 5A, B   illustrate a graphical user interface showing a first type of layout area formed as a full circle (FIG. 5A) and a second type of layout area formed as an intersecting area (FIG. 5B),

FIGS. 6A, B   illustrate an exemplary version of a layout area formed as full circle in a first graphical representation (FIG. 6A) and in a second graphical representation (FIG. 6B),

FIGS. 7A, B   illustrate a graphical user interface of an exemplary implementation of the method for determining a layout area according to the present invention,

FIGS. 8A-H    illustrate the graphical user interface of FIG. 7 during stationing of a total station via a free-stationing process, and

FIGS. 9A-C    illustrate schematically a first graphical representation (FIG. 9A), a second graphical representation (FIG. 9B), and a first and second graphical representation (FIG. 9C).

**Detailed Description**

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

Also, it is to be understood that the phraseology and terminology used herein is for the purpose of description and should not be regarded as limiting. All definitions, as defined and used herein, should be understood to control over dictionary definitions, definitions in documents incorporated by reference, and/or ordinary meanings of the defined terms. The indefinite articles "a" and "an", as used herein in the specification and in the claims, unless clearly indicated to the contrary, should be understood to mean "at least one". The phrase "and/or", as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one of a number or list of elements, and, optionally, additional unlisted items. Only terms clearly indicated to the contrary, such as "only one of" or "exactly one of", or, when used in the claims, "consisting of" will refer to the inclusion of exactly one element of a number or list of elements. In general, the term "or" as used herein shall only be interpreted as indicating exclusive alternatives (ke. "one or the other but not both") when preceded by terms of exclusivity, such as "either", "one of", "only one of", or "exactly one of", "consisting essentially of", when used in the claims, shall have its ordinary meaning as used in the field of patent law.

As used herein in the specification and in the claims, the phrase "at least one" in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

The use of "including, or "comprising, or "having" and variations thereof herein is meant to encompass the items listed thereafter and equivalents thereof as well as additional items. Unless limited otherwise, the terms "connected", "coupled", and "mounted", and variations thereof herein are used broadly and encompass direct and indirect connections, couplings, and mountings. In addition, the terms "connected" and "coupled", and variations thereof are not restricted to physical or mechanical connections or couplings.

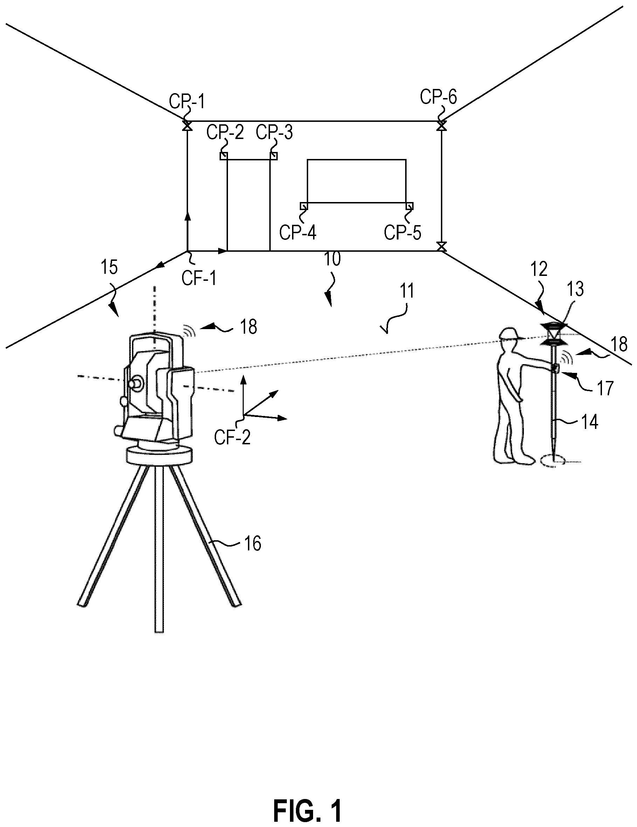

**FIG. 1** shows an operator using a surveying instrument **10** deployed at a worksite **11**. The worksite 11 may be a construction site, inside or outside, or a surveying site, amongst others. In addition to the surveying instrument 10, a target **12** that is remote from the surveying instrument 10 may be deployed at the worksite 11. The target 12 may include a reflector **13**, such as a prism and/or a cat-eye, that is mounted on top of a pole **14**.

The surveying instrument 10 is formed as a total station and comprises a measuring unit **15** that is mounted on a mounting support structure in the form of a tripod **16**. The surveying instrument 10 also comprises a removable control panel in the form of a remote controller **17** that can be used for remote control of the measuring unit 15 via a wireless connection **18**.

Before the operator can use the total station 10 for layouting, measuring and/or other tasks, the total station must be stationed via a stationing process to the worksite 11. From prior art, different stationing processes are known, such as free-stationing process, model-based stationing process, automatic stationing process, or any other stationing process.

The basic concept of free-stationing processes is that at an initial phase, a number of control points, here control points **CP-1, CP-2, CP-3, CP-4, CP-5, CP-6**, are positioned at scattered locations at the worksite 11. The control points are materialized by prisms, cat-eyes, reflective foils, or other forms of reflective targets for returning the laser beam from the total station. The exact location of the control points is determined and logged in terms of coordinates on a specified coordinate frame, here the coordinate frame of the worksite 11.

To determine the pose (position and orientation) of the total station 10 in the coordinate frame of the worksite 11, the total station 10 sights a number of the control points and takes measurement samples of distance and angle data in its coordinate frame. To differ between the coordinate frames, the coordinate frame of the worksite 11 is called "first coordinate frame" **CF-1** and the coordinate frame of the total station 10 is called "second coordinate frame" **CF-2**.

The coordinates in the first coordinate frame CF-1 are called "first coordinates" and the coordinates in the second coordinate frame CF-2 are called "second coordinates".

Based on a mathematical equation system, the pose of the total station can be calculated from the first coordinates of the control points in the first coordinate frame CF-1 and from the second coordinates of the control points in the second coordinate frame CF-2. With increasing number of measurement samples and a good angular distribution of the control points at the worksite 11 the position accuracy of the pose can increase.

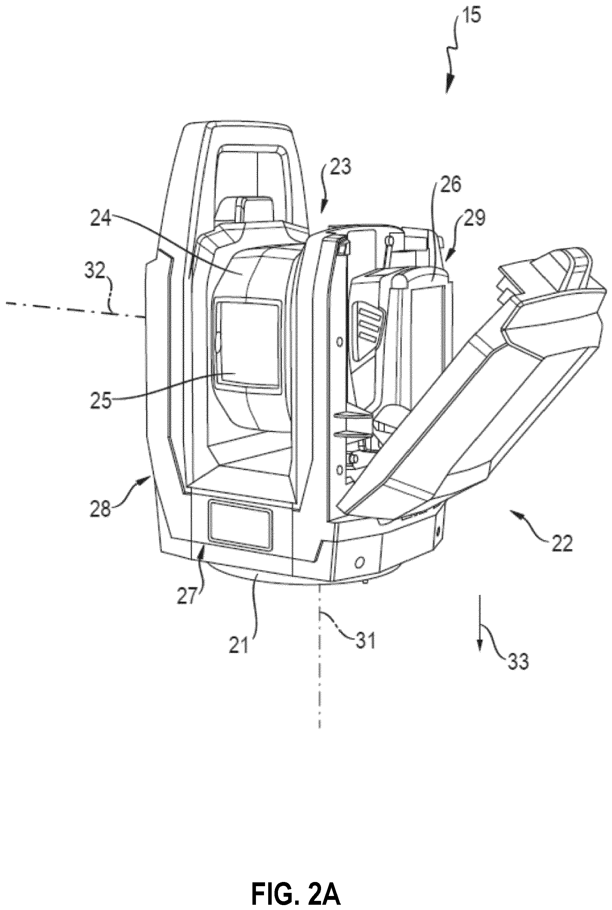

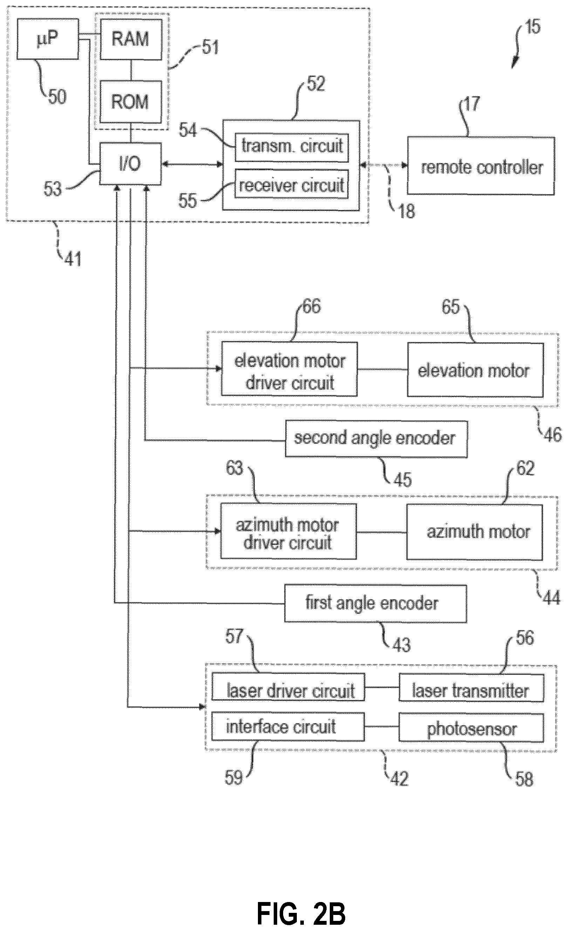

FIGS. 2A, B show an exemplary version of the measuring unit 15 used in the surveying instrument 10 of FIG. 1 in a perspective view (FIG. 2A) and a block diagram of the main components of the measuring unit 15 as illustrated in FIG. 2A (FIG. 2B).

The surveying instrument 10 is designed as robotic total station and the measuring unit 15 comprises a base **21**, a support **22**, and a measuring head **23**. The measuring head 23 is enclosed by a housing **24**, which includes an exit window **25**. In the housing 24, a distance measuring device that can emit a distance measuring beam and a tracking device that can emit a radiation are arranged. The distance measuring beam and the radiation are emitted through the exit window 25 to leave the housing 24.

In the exemplary version of FIG. 2A, the support 22 is U-formed and includes a bottom portion **27**, a first side portion **28**, and a second side portion **29**. The support 22 can rotate completely around its circumference at a full 360° angle with respect to the base 21 about a first axis of rotation **31**. The measuring head 23 is pivotably mounted to the support 22 about a second axis of rotation **32** and is arranged between the first side portion 28 and the second side portion 29 of the support. Usually, the first axis of rotation 31 is aligned parallel to a local direction of gravitation **33**, and the second axis of rotation 32 is aligned perpendicular to the local direction of gravitation 33.

An azimuth motor device and a first angle encoder may be located in the bottom portion 27 of the support 22 and allow to rotate the measuring unit 15 about the first axis of rotation 31 and to determine the direction of the distance measuring beam in a first plane perpendicular to the first axis of rotation 31. An elevation motor device and a second angle encoder may be located in the first side portion 28 of the support 22 and allow the measuring head 23 to pivot about the second axis of rotation 32 and to determine the direction of the distance measuring beam in a second plane perpendicular to the second axis of rotation 32. To make the instrument 12 fully automatic, a self-leveling device, which may be arranged in the bottom portion 27 of the support 22, can be included.

FIG. 2B shows a block diagram of the main components of the measuring unit 15 of the surveying instrument 10. The measuring unit 15 includes a first electronic device **41**, a distance measuring device **42**, a first angle encoder **43**, an azimuth motor device **44**, a second angle encoder **45**, and an elevation motor device **46**. Optionally, the measuring unit 15 can additionally include one or more cameras, such as a tracking camera configured to track a reflector target, or an aiming camera configured to let the user aim to a point of interest.

The first electronic device 41 comprises a first processing circuit ($\mu$P) **50**, a first memory circuit **51** that may include associated random-access memory (RAM) and read only memory (ROM), a first communications circuit **52**, and a first input/output (I/O) interface circuit **53**. The first processing circuit 50, also called device control unit, may communicate with the first memory circuit 51 and first communications circuit 52 and is configured to control the laser instrument 12. The first communications circuit 52 includes a first transmitter circuit **54** and a first receiver circuit **55** and is configured to be connected to a communications circuit of the remote controller via the communication link. The first input/output interface circuit 53 is an interface between the first processing circuit 50 and the various types of motor driver circuits and sensor circuits of the measuring unit 15.

The distance measuring device 42 includes a laser transmitter **56**, a laser driver circuit **57**, a photosensor **58**, and a laser receiver interface circuit **59**. The laser driver circuit 57 provides current for the laser transmitter 56 which emits a distance measuring beam. The photosensor 58 receives at least a part of the distance measuring beam reflected at a target or a surface of the worksite, and the current signal that is outputted by the photosensor 58 is directed to the laser receiver interface circuit 59. After appropriate amplification and demodulation, the signal is sent via the first input/output interface circuit 53 to the first processing circuit 50.

The first angle encoder 43 provides input signals to the first processing circuit 50, so that it knows exactly in which horizontal angle the laser transmitter 56 is arranged in the horizontal plane; the output signal of the first angle encoder 43 is directed to the first input/output interface circuit 53. The azimuth motor device 44 includes an azimuth motor **62**, which is the motive force to rotate the main housing 22 of the measuring unit 15 about the first axis of rotation 31, and an azimuth motor driver circuit **63**, which will provide the proper current and voltage to drive the azimuth motor 62.

The second angle encoder 45 provides input signals to the first processing circuit 50, so that it knows exactly in which second angle the laser transmitter 56 is arranged in the second plane; the output signal of the second angle encoder 45 is directed to the first input/output interface circuit 53. The elevation motor device 46 includes an elevation motor **65**, which is the motive force to pivot the measuring head 23 about the second axis of rotation 32, and an elevation motor driver circuit **66**, which will provide the proper current and voltage to drive the elevation motor 65.

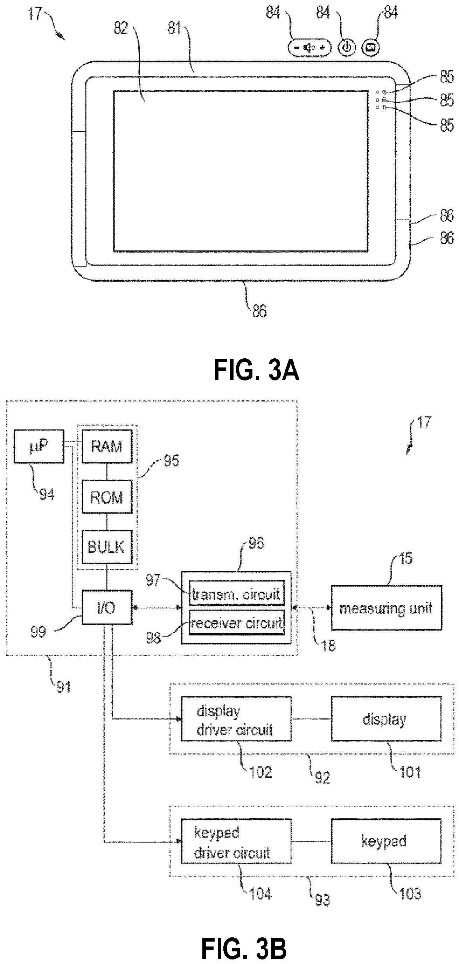

FIGS. 3A, B show an exemplary version of the remote controller 17 used in the surveying instrument 10 of FIG. 1 in a front view (FIG. 3A) and a block diagram of the main components of the remote controller 17 as illustrated in FIG. 3A (FIG. 3B).

The remote controller 17 is designed as tablet computer and includes a housing **81**, a touch screen display **82**, a battery **83**, a set of buttons **84**, e.g., volume control button, power on/off button, and display control button, a set of indicators **85**, e.g., for operating status, data storage status, and battery status, a set of connectors **86**, e.g., for docking, data storage, and USB, and a card slot **87**.

FIG. 3B shows a block diagram of the main components of the remote controller 17. The remote controller 17 may include a second electronic device **91**, a display device **92**, and an input device **93**.

The second electronic device 91 comprises a second processing circuit ($\mu$P) **94**, a second memory circuit **95** that may include associated random-access memory (RAM), read only memory (ROM), and some type of bulk memory (BULK), a second communications circuit **96**, and a second input/output (I/O) interface circuit **97**. The second processing circuit 94 may communicate with the second memory circuit 95 and second communications circuit 96 and is configured to control the remote controller 17. The second communications circuit 96 includes a second transmitter circuit **98** and a second receiver circuit **99** and is configured to be connected to the first communications circuit 52 of the measuring unit 15 via the wireless communication 18. The second input/output interface circuit 97 is an interface between the second processing circuit 94 and the various driver circuits of the remote controller 17.

In the second memory circuit 95 several program codes having computer-executable instructions for performing a method may be stored. The stored program codes may include a program code for performing a method for determining for a worksite, at which a surveying instrument is deployed, a layout area, in which accuracies not larger than a predefined accuracy threshold can be achieved during operating the surveying instrument.

The method for determining a layout area is performed by a computer system having evaluation, data processing and/or control functionality. In the exemplary version of the surveying instrument 10, the computer system is integrated into the second processing circuit 94 of the second electronic device 91 of the remote controller 17. Alternatively, the computer system may be integrated into the first processing circuit 50, or into the first and second processing circuits 50, 94, or in any other type of suitable processing circuit.

The display device 92 includes a display **101** and a display driver circuit **102**. The display driver circuit will be in communication with the second I/O interface circuit 97 and provides the correct interface and data signals for the display 101. If the remote controller 17 is a laptop computer, for example, then this would be the standard display seen in most laptop computers. Or, if the remote controller 17 is a tablet computer or a smart phone, in which case the display device is a much smaller physical device, the display device 101 could be a touch screen display.

The user-operated input device 93 includes a keypad **103** and a keypad driver circuit **104**. The keypad driver circuit will be in communication with the second I/O interface circuit 97 and controls the signals that interface to the keypad 103. If the display device 101 is a touch screen display, then there may not be a separate keypad on the remote controller 17, because most of the command or data to input functions will be available by touching the display itself and the keypad is integrated in the touch screen display. There may be some type of power on/off button, but that would not necessarily be considered a true keypad and typically would not be used for entering data.

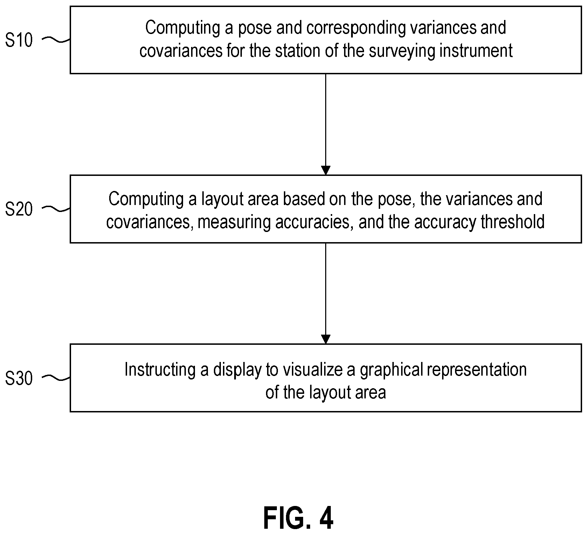

FIG. 4 shows a method for determining for a worksite, in which a surveying instrument is deployed at a station, a layout area according to the present invention in a flow chart. The surveying instrument 10 deployed at the worksite 11 and the computer system 94 can be used to perform the method according to the present invention.

The layout area defines at the worksite 11 an area, in which accuracies not larger than a predefined accuracy threshold u can be achieved during operating the surveying instrument 10. Measurements with the surveying instrument 10 are usually described by a well-established error model, where angle and distance measurements are treated as independent random variables with measuring accuracies $\sigma_{HA}$ for the horizontal angle HA and $\sigma_{HD}$ for the horizontal distance HD.

The method for determining a layout area according to the present invention is performed by the computer system 94 and comprises the following steps:

- Computing a pose ($E_S$, $N_S$, ori) and corresponding variances ($Q_{ES,ES}$, $Q_{NS,NS}$, $Q_{ori,ori}$) and covariances ($Q_{ES,ori}$, $Q_{NS,ori}$) for the station of the surveying instrument 10 (step **S10**),
- Computing the layout area based on the pose ($E_S$, $N_S$, ori), the variances ($Q_{ES,ES}$, $Q_{NS,NS}$, $Q_{ori,ori}$) and covariances ($Q_{ES,ori}$, $Q_{NS,ori}$). the measuring accuracies ($\sigma_{HA}$, $\sigma_{HD}$), and the accuracy threshold u (step **S20**), and
- Instructing a display to visualize a graphical representation of the layout area (step **S30**).

The pose of the total station can be calculated by a free-stationing process, a model-based stationing process, an automatic stationing process, or any other stationing process. If the stationing process is a free-stationing process, at least two control points are used, the control points having known first coordinates in the first coordinate frame CF-1 of the worksite 11 and known second coordinates in the second coordinate frame CF-2 of the surveying instrument 10.

In statistics, a covariance matrix is a square matrix giving the covariance values between each pair of elements of a given random vector.

The covariance matrix Qxx of the pose ($E_S$, $N_S$, ori) can be written as:

$$Qxx = \begin{bmatrix} Q_{E_S,E_S} & Q_{E_S,N_S} & Q_{E_S,ori} \\ Q_{N_S,E_S} & Q_{N_S,N_S} & Q_{N_S,ori} \\ Q_{ori,E_S} & Q_{ori,N_S} & Q_{ori,\,ori} \end{bmatrix}$$

Whereas the diagonal elements ($Q_{ES,ES}$, $Q_{NS,NS}$, $Q_{ori,ori}$) represent the variances of the variables $E_S$ and $N_S$, i.e., covariances of an element with itself, and the off-diagonal elements ($Q_{ES,NS} = Q_{NS,ES}$, $Q_{ES,ori} = Q_{ori,ES}$, $Q_{NS,ori} = Q_{ori,NS}$) represent the covariances between pairs of the elements $E_S$, $N_S$, ori.

An observation point OP can be denoted by variables HD and HA with HD being a horizontal distance and HA being a horizontal angle. With the pose ($E_S$, $N_S$, ori), the coordinates E and N of the observation point OP can be computed by:

$$E = E_S + HD \sin(HA + ori)$$

$$N = N_S + HD \cos(HA + ori)$$

The covariance matrix $\Sigma_{E,\,N}$ of E and N can be computed through variance propagation by

$$\Sigma_{E,\,N} = H\Sigma H^{\mathsf{T}} \text{ with } \Sigma = \begin{bmatrix} Qxx & 0 & 0 \\ 0 & \sigma_{HA}^2 & 0 \\ 0 & 0 & \sigma_{HD}^2 \end{bmatrix}$$

and

$$H = \begin{bmatrix} 1 & 0 & HD \cos(HA + ori) & HD \cos(HA + ori) & \sin(HA + ori) \\ 0 & 1 & -HD \sin(HA + ori) & -HD \sin(HA + ori) & \cos(HA + ori) \end{bmatrix}$$

Curves of equal accuracy u(OP) can be denoted by

$$u(OP) = \sqrt{Trace\ \Sigma_{E,N}} = const$$

The curves of equal accuracy u take the form of concentric circles and can be transformed to equations for the center and the radius. The center is defined in the first coordinate frame CF-1 of the worksite 11 by:

$$(E_S,\ N_S) + \frac{1}{c}\left(Q_{N_S,ori}, - Q_{E_S,ori}\right)$$

The radius is defined by:

$$\sqrt{\frac{u^2}{c} - \frac{Q_{E_S,E_S} + Q_{N_S,N_S} + \sigma_{HD}^2}{c} + \frac{Q_{E_S,ori}^2 + Q_{N_S,ori}^2}{c^2}},\ \text{with } c = Q_{ori,ori} + \sigma_{HA}^2.$$

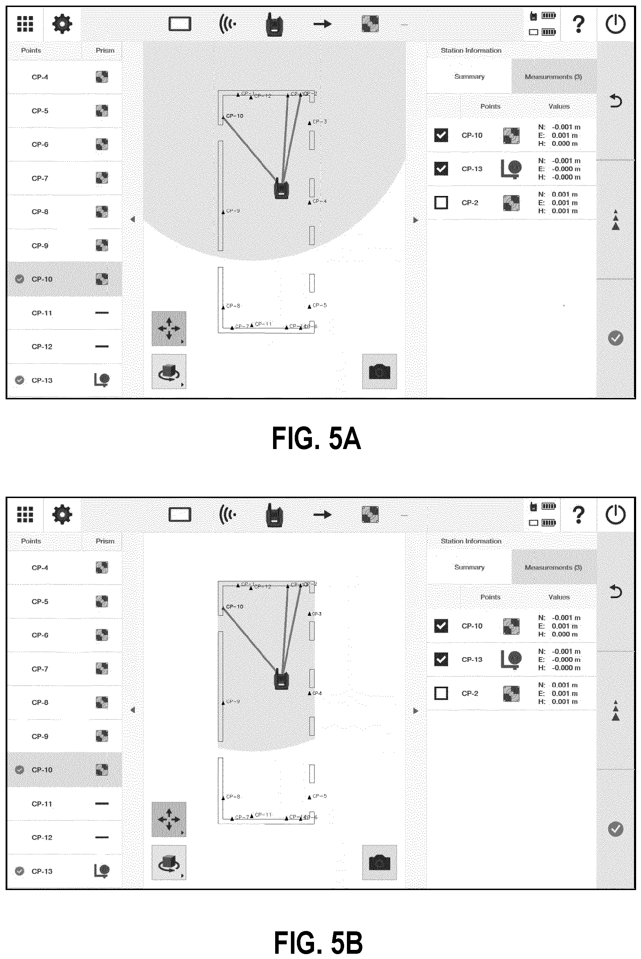

As discussed with reference to FIG. 4, the layout area, in which accuracies not larger than the predefined accuracy threshold u can be achieved during operating the surveying instrument 10, takes the form of a circle. **FIGS. 5A, B** illustrate a graphical user interface showing a first type of layout area formed as a full circle (FIG. 5A) and a second type of layout area formed as an intersecting area (FIG. 5B).

FIG. 5A illustrates the graphical user interface showing the first type of layout area. The layout area is formed as a full circle that is projected onto a two-dimensional plan of the worksite. FIG. 5B illustrates the graphical user interface showing the second type of layout area. The layout area is formed as intersecting area of the full circle and a predefined working area at the worksite. In practice, the operator is interested in that section of the working area, in which he can achieve accuracies smaller than the predefined accuracy threshold. The intersecting area visualizes that section of the working area.

Both types of layout area allow an operator to easily check if he can achieve the required accuracy during layouting or measuring with the surveying instrument at the worksite. The first and second type of layout area enable the operator to visualize data and understand it easily.

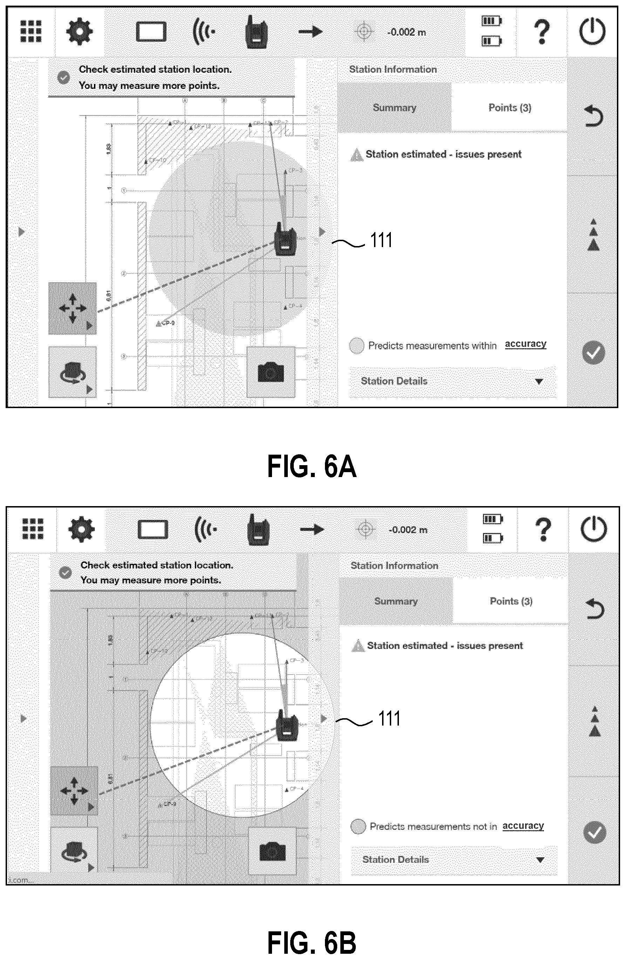

**FIGS. 6A, B** illustrate an exemplary version of a layout area formed as full circle in a first graphical representation (FIG. 6A) and in a second graphical representation (FIG. 6B).

FIG. 6A shows the first graphical representation that contains a contour line **111** of equal accuracy, wherein the inside of the contour line is filled. The first graphical representation of the layout area is called "full circle (positive)" and refers to the feature "graphical representation" of the present invention.

FIG. 6B shows the second graphical representation that contains the contour line 111 of equal accuracy, wherein the outside of the contour line is filled. The second graphical representation of the layout area is called "full circle (negative)" and refers to the feature "graphical representation" of the present invention.

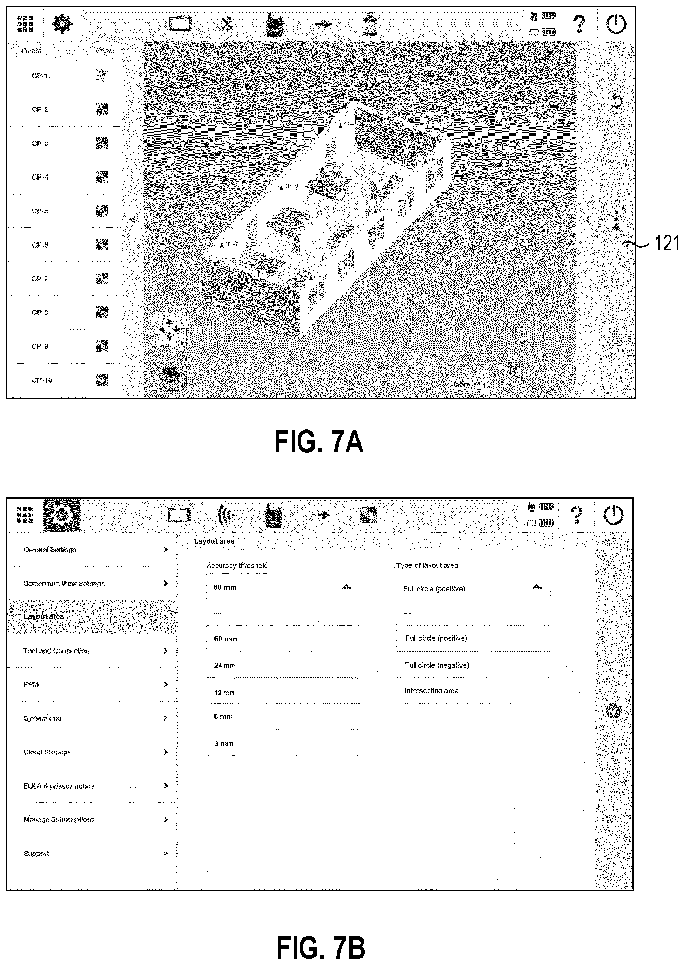

**FIGS. 7A, B** illustrate a graphical user interface of an exemplary implementation of the method for determining a layout area according to the present invention. Before an operator can use the total station 10 for layouting, measuring and/or other tasks at a worksite, the total station 10 must be stationed via a stationing process to the worksite 11.

In the exemplary version shown in FIG. 7A, the stationing process is a free-stationing process using a set of control points. At an initial phase, the operator has loaded a floorplan of the worksite and a set of control points **CP-1 to CP-13** to the computer system. The control points have known first coordinates in the first coordinate frame CF-1 of the worksite. To determine the pose of the total station 10 in the first coordinate frame CF-1, the total station 10 will sight a number of the control points and take measurement samples of distance and angle data in the second coordinate frame CF-2 of the total station 10. The measurements can be performed manually by the operator, semi-automatically or automatically by the total station 10. In the exemplary version, the control points are materialized by reflector foils (CP-1, CP-11, and CP-12), by two-dimensional cat-eyes (CP2 to CP-10), and by glass prisms (CP-13).

In the exemplary version of FIG. 7A, the measurements are performed semi-automatically by the total station 10. The operator selects a control point from the set of control points by clicking and confirms his selection by clicking a measurement button **121**.

FIG. 7B illustrates the graphical user interface that allows the operator to define the layout area. In the exemplary version shown in FIG. 7B, the operator can select the accuracy threshold that is used for computing the layout area and the type of layout area that is used for visualization. As discussed with reference to FIGS. 5 and 6, the layout area can be a full circle (positive), a full circle (negative) or an intersecting area of the full circle and the working area.

The accuracy threshold and the type of layout area can be selected from a menu. In FIG. 7B, both menus for the accuracy threshold and the type of layout area are shown. This is done for illustration. In practice, only one menu can be shown. Instead of using predefined values for the accuracy threshold as shown in FIG. 7B, the accuracy threshold can be defined by the operator by setting a value in millimeters.

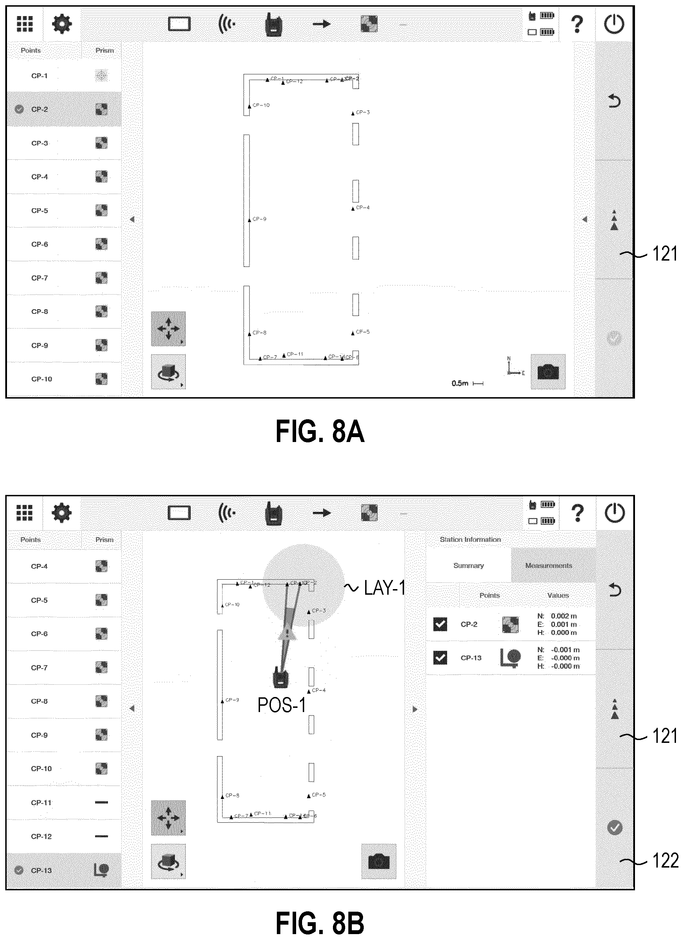

FIGS. 8A-H illustrate the graphical user interface of FIG. 7 during stationing of the total station 10 via a free-stationing process. As explained with respect to FIG. 7, the operator has loaded a floorplan of the worksite and the control points CP-1 to CP-13 to the computer system 94.

For stationing the total station 10, the operator selects a first control point, here control point CP-2, from the set of control points. Upon the operator's selection of CP-2 and confirming his selection by clicking the measurement button 121, the total station 10 is instructed by the computer system 94 to measure distance and angle data to the control point CP-2. Once the distance and angle data for the control point CP-2 have been measured, the measurement to CP-2 can be shown by highlighting the control point CP-2 in the floorplan (FIG. 8A).

Then, the operator selects a second control point from the set of control points, here control point CP-13. Upon the operator's selection of CP-13 and clicking the measurement button 121, the total station 10 is instructed by the computer system 94 to measure distance and angle data to the control point CP-13. Once the distance and angle data for CP-13 have been measured, the measurement to CP-13 can be shown by highlighting the control point CP-13 in the floorplan (FIG. 8B).

Since for at least two control points second coordinates are available in the second coordinate frame CF-2 of the total station 10, a pose **POS-1**, and corresponding variances and covariances can be computed by the computer system 94 from the first coordinates and second coordinates of the control points CP-2 and CP-13 (step S10). Once the pose and the corresponding variances and covariances are computed, the layout area can be computed based on the pose, the variances and covariances, the measurement accuracies $\sigma_{HD}$, $\sigma_{HA}$, and the accuracy threshold by using the equation for the center and the radius of the layout area (step S20). Finally, the layout area is visualized by a graphical representation **LAY-1** (step S30). The layout area is represented by a circular contour line and a full circle (positive) (FIG. 8B). Within the colored full circle, the predefined accuracy threshold can be achieved, whereas, outside of the colored full circle, the accuracy threshold cannot be achieved.

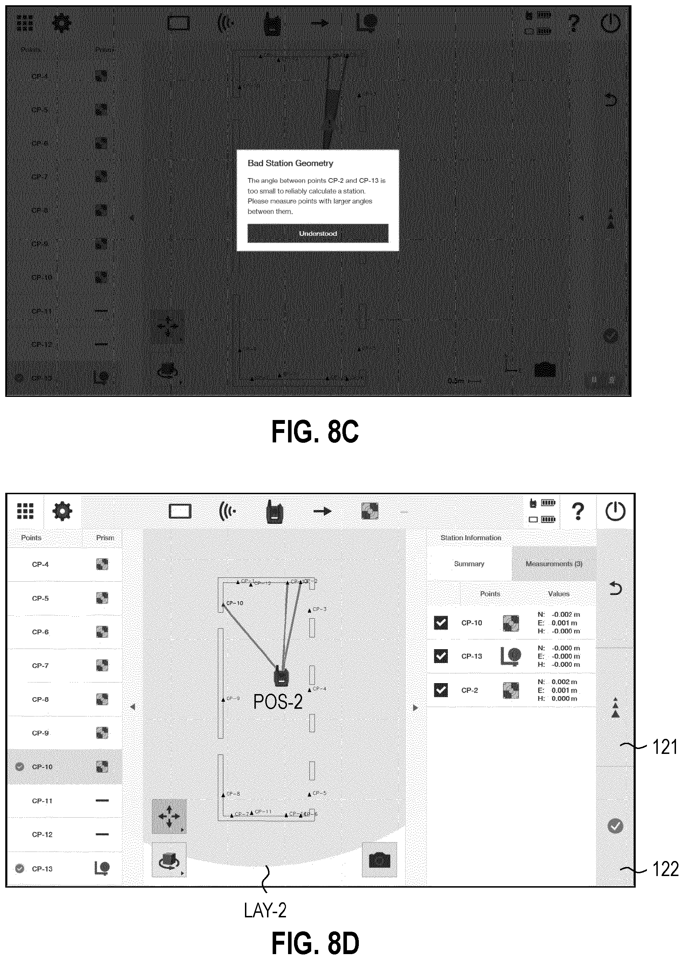

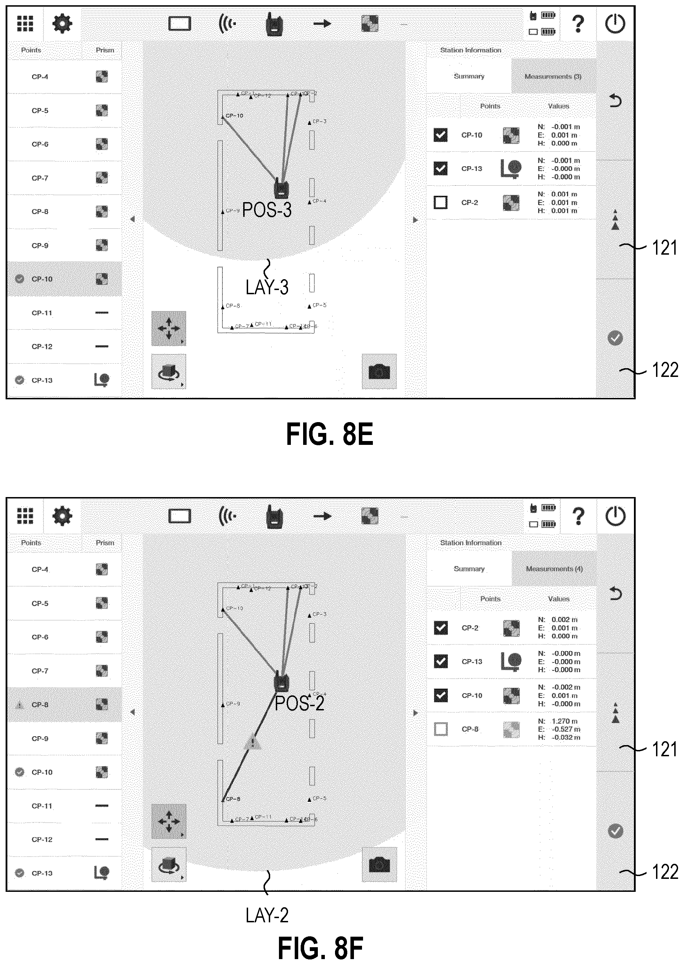

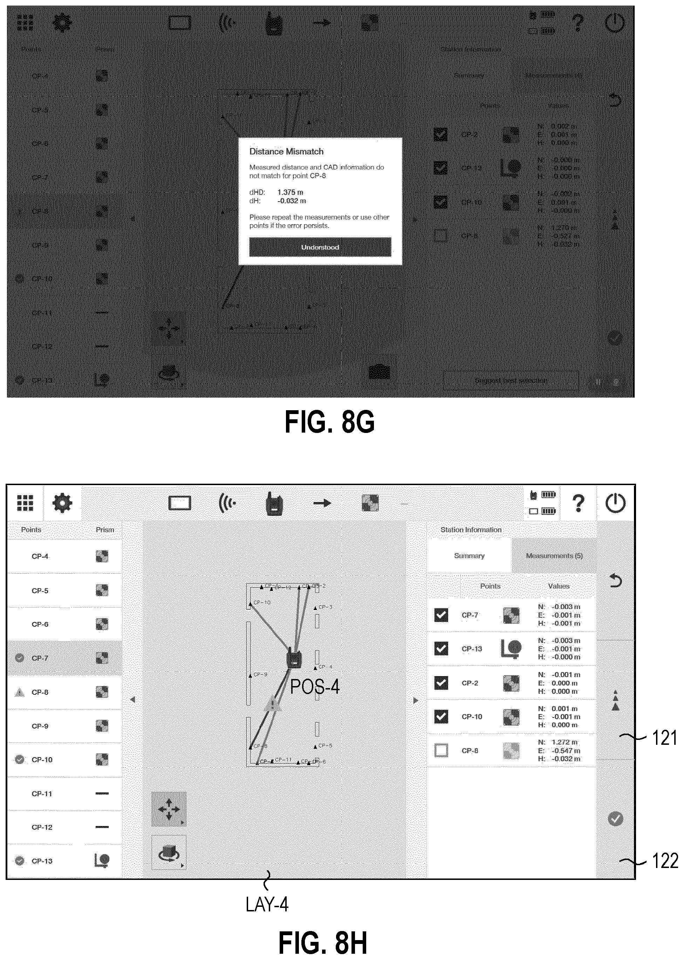

FIG. 8B shows a warning symbol. The computer system 94 performs an angle check and determines the angle between the control points CP-2 and CP-13. To continue, the operator has to click the button "Understood" to confirm that he is aware of the bad station geometry. In the exemplary version of FIG. 8, the control points CP-2 and CP-13 are used for computing the pose POS-1 and the layout area LAY-1.

Upon visualizing the layout area LAY-1 corresponding to the control points CP-2 and CP-13, the operator can decide whether a further measurement should be performed, or the stationing process is over. By clicking the confirm button 122, the stationing process is over and the current values for the pose POS-1 and the layout area LAY-1 are used for operating the total station 10.

To continue the stationing process, the operator selects a third control point from the set of control points, here control point CP-10. Upon the operator's selection of CP-10 and clicking the measurement button 121, the total station 10 is instructed by the computer system 94 to measure distance and angle data to the control point CP-10. Once the distance and angle data for CP-10 have been measured, the measurement to CP-10 can be shown by highlighting the control point CP-10 and/or by connecting the control point CP-10 via an arrow to the current pose (FIG. 8D).

Once the second coordinates for control point CP-10 are available, the method comprising the steps S10, S20, and S30 is repeated for the sub-set of the control points CP-2, CP-13, and CP-10. A new pose **POS-2** and corresponding variances and covariances are computed by the computer system 94 from the first coordinates and second coordinates of the control points CP-2, CP-13, and CP-10 (step S10). A new layout area is computed based on the new pose POS-2, the corresponding variances and covariances, the measurement accuracies $\sigma_{HD}$, $\sigma_{HA}$, and the accuracy threshold by using the above-mentioned equations for the center and the radius of the layout area (step S20). The new layout area is visualized by a graphical representation **LAY-2** (step S30). The new layout area LAY-2 is represented by a colored circle (FIG. 8D).

By using three control points for computing the new layout area, the full circle and also the intersecting area of the full circle and the working area increases. The small angle between the control points CP-2 and CP-13 results in a much smaller layout area LAY-1 compared to the new layout area LAY-2 corresponding to the control points CP-2, CP-13, and CP-10.

FIG. 8E shows a graphical representation **LAY-3** of a layout area corresponding to the control points CP-13 and CP-10. The operator selects the control points CP-13 and CP-10 by unticking the checkbox of control point CP-2 and confirms his selection by clicking the confirm button 122. The method comprising the steps S10, S20, and S30 is repeated for the sub-set of the control points CP-13 and CP-10. A new pose **POS-3** and corresponding variances and covariances are computed by the computer system 94 from the first coordinates and second coordinates of the control points CP-13 and CP-10 (step S10). A new layout area is computed based on the new pose POS-3, the corresponding variances and covariances, the measurement accuracies $\sigma_{HD}$, $\sigma_{HA}$, and the accuracy threshold by using the above-mentioned equations for the center and the radius of the layout area (step S20). The new layout area is visualized by the graphical representation LAY-3 (step S30).

Upon visualizing the layout area LAY-3 corresponding to the control points CP-13, and CP-10, the operator can decide whether a further measurement should be performed, or the stationing process is over. By clicking the confirm button 122, the stationing process is over and the current values for the pose and the layout area are used for operating the total station 10.

To continue the stationing process, the operator selects a fourth control point from the set of control points, here control point CP-8. Upon the operator's selection of CP-8 and clicking the measurement button 121, the total station 10 is instructed by the computer system 94 to measure distance and angle data to the control point CP-8. Once the distance and angle data for the control point CP-8 have been measured, the measurement to CP-8 can be shown by highlighting the control point CP-8 and/or by connecting the control point CP-8 via an arrow to the current pose (FIG. 8F).

FIG. 8F shows a warning symbol for the control point CP-8. The computer system 94 performs a distance check. Since the measured distance and the CAD information derived from the floorplan do not match for the control point CP-8, the operator is warned by the computer system 94. FIG. 8G illustrates the warning to the operator. To continue, the operator has to click the button "Understood" to confirm that he is aware of the bad quality of the measurement to control point CP-8. In the exemplary version of FIG. 8, the control point CP-8 cannot be used for computing the pose and the layout area.

Due to the bad quality of the measurement to control point CP-8, the layout area was not computed for the control points CP-2, CP-13, CP-10, and CP-8. The operator can decide whether the measurement to control point CP-8 should be repeated or a further measurement should be performed, or the stationing process is over. By clicking the confirm button 122, the stationing process is over and the current values for the pose and the layout area are used for operating the total station 10.

To continue the stationing process, the operator selects a fifth control point from the set of control points, here control point CP-7. Upon the operator's selection of CP-7 and clicking the measurement button 121, the total station 10 is instructed by the computer system 94 to measure distance and angle data to the control point CP-7. Once the distance and angle data for the control point CP-7 have been measured, the measurement to CP-7 can be shown by highlighting the control point CP-7 and/or by connecting the control point CP-7 via an arrow to the current pose (FIG. 8H).

Once the second coordinates for control point CP-7 are available, the method comprising the steps S10, S20, and S30 is repeated for the sub-set of the control points CP-2, CP-13, CP-10, and CP-7. A new pose **POS-4** and corresponding variances and covariances are computed by the computer system 94 from the first coordinates and second coordinates of the control points CP-2, CP-13, CP-10, and CP-7 (step S10). A new layout area is computed based on the new pose POS-3, the corresponding variances and covariances, the measurement accuracies $\sigma_{HD}$, $\sigma_{HA}$, and the accuracy threshold by using the above-mentioned equations for the center and the radius of the layout area (step S20). The new layout area is visualized by a graphical representation **LAY-4** (step S30).

The new poses POS-2, POS-3 and POS-4 are features that correspond to the term "pose" and "new pose" in the present invention and the new layout areas LAY-2, LAY-3 and LAY-4 are features that correspond to the term "layout area" and "new layout area" in the present invention.

To increase the layout area, the operator may adapt the selection of control points for the calculation of the pose and the layout area. Those control points that are considered in the layout area are shown by ticked checkboxes in the chapter "Measurements" (FIG. 8H).

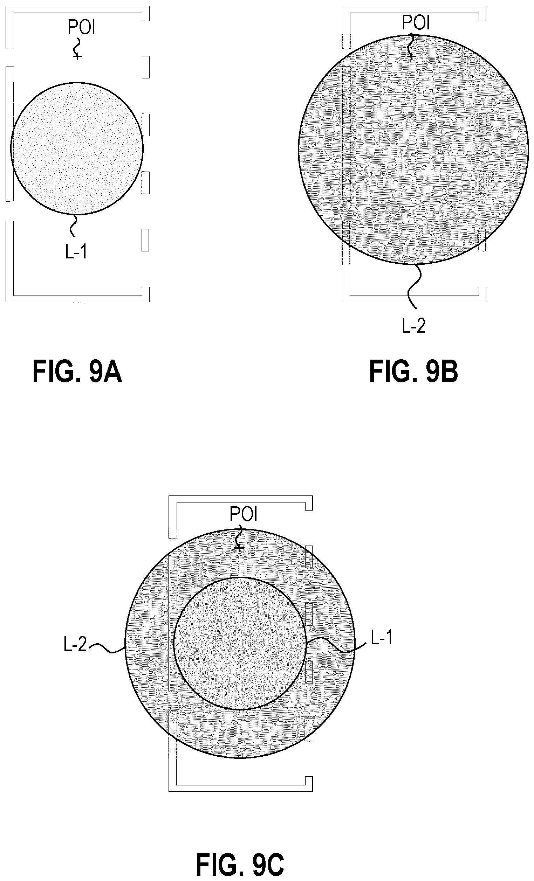

In the exemplary versions of the layout area shown in FIGS. 5 to 8, the accuracy threshold comprises one value. Alternatively, the accuracy threshold can comprise a first accuracy threshold $u_1$ and a second accuracy threshold $u_2$ different from the first accuracy threshold. In the step S20 of computing the layout area, a first layout area **L-1** corresponding to the first accuracy threshold $u_1$ and a second layout area **L-2** corresponding to the second accuracy threshold $u_2$ can be computed by the computer system 94. In the step S30 of visualizing a graphical representation of the layout area, a first graphical representation of the first layout area, a second graphical representation of the second layout area, or the first graphical representation of the first layout area and the second graphical representation of the second layout area can be displayed. FIGS. 9A-C illustrate the three options how to visualize the first and second layout areas.

In the exemplary version of FIG. 9, the first graphical representation is a first contour line related to the first accuracy threshold $u_1$ (FIG. 9A), and the second graphical representation is a second contour line related to the second accuracy threshold $u_2$ (FIG. 9B). In Fig. 9C, the first contour line and the second contour line are displayed.

The layout area that is determined during stationing of the total station 10 is provided for use in layouting a point of interest **POI**. Upon selecting the point of interest POI by the operator, it is checked by the computer system 94 whether the selected point of interest POI is located inside or outside of the layout area.

As shown in FIG. 9A, the point of interest POI is located outside of the (first) layout area L-1. Upon verification that the point of interest POI is located outside of the (first) layout area L-1, a predefined action can be performed. The predefined action may comprise generating a message stating that the point of interest POI is not located inside of the (first) layout area and/or that the (first) accuracy threshold cannot be achieved.

As shown in FIG. 9B, the point of interest POI is located inside of the (second) layout area L-2. Upon verification that the point of interest POI is located inside of the (second) layout area L-2, a predefined action can be performed. The predefined action may comprise generating a message stating that the point of interest POI is located inside of the (second) layout area and/or that the (second) accuracy threshold can be achieved.

**Claims**

1. A computer-implemented method for determining for a worksite (11), in which a surveying instrument (10) is deployed at a station, a layout area, in which accuracies not larger than a predefined accuracy threshold (u) can be achieved during operating the surveying instrument (10), the method being performed by a computer system (94) and comprising the steps:

   - Computing a pose ($E_S$, $N_S$, ori) and corresponding variances ($Q_{ES,ES}$, $Q_{NS,NS}$. $Q_{ori, ori}$) and covariances ($Q_{ES,ori}$, $Q_{NS,ori}$) for the station of the surveying instrument (10),
   - Computing the layout area based on the pose ($E_S$, $N_S$, ori), the variances ($Q_{ES,ES}$, $Q_{NS,NS}$, $Q_{ori, ori}$) and covariances ($Q_{ES,ori}$, $Q_{NS,ori}$), measuring accuracies ($\sigma_{HA}$, $\sigma_{HD}$), and the accuracy threshold (u), and
   - Instructing a display to visualize a graphical representation (LAY-1, LAY-2, LAY-3, LAY-4) of the layout area.

2. Method according to claim 1, wherein the layout area is defined by a circular contour line having a center defined by

$$(E_S, N_S) + \frac{1}{c}\left(Q_{N_S,ori}, - Q_{E_S,ori}\right)$$

, and a radius defined by $\sqrt{\dfrac{u^2}{c} - \dfrac{Q_{E_S,E_S} + Q_{N_S,N_S} + \sigma_{HD}^2}{c} + \dfrac{Q_{E_S,ori}^2 + Q_{N_S,ori}^2}{c^2}}$ ,

with $c = Q_{ori,ori} + \sigma_{HA}^2$ .

3. Method of any one of claims 1 to 2, wherein the layout area is related to the worksite (11) and stored in the computer system (94) and/or stored to a memory connected to the computer system (94) and the layout area is provided for use in operating the surveying instrument (10).

4. Method of claim 3, wherein the layout area is provided for use in layouting a point of interest (POI) and upon selecting the point of interest (POI), it is checked by the computer system (94) whether the point of interest (POI) is located inside of the layout area or outside of the layout area, wherein:

- upon verification that the point of interest (POI) is located inside of the layout area, a predefined action is performed, the predefined action comprising generating a message stating that the point of interest (POI) is located inside of the layout area and/or that the accuracy threshold can be achieved, and
- upon verification that the point of interest (POI) is located outside of the layout area, a predefined action is performed, the predefined action comprising generating a message stating that the point of interest (POI) is not located inside of the layout area and/or that the accuracy threshold cannot be achieved.

5. Method of any one of claims 1 to 4, wherein the pose and the corresponding variances and covariances are computed by a free-stationing algorithm based on a set of control points (CP-1, ..., CP-13) having known first coordinates in a first coordinate frame (CF-1) of the worksite (11) and at least a sub-set (CP-2, CP-10, CP-13) of the set of control points having known second coordinates in a second coordinate frame (CF-2) of the surveying instrument (10).

6. Method of the previous claim 5, wherein from the set of control points at least one further control point (CP-7) being different from the sub-set of control points is selected, second coordinates are determined for the at least one further control point (CP-7) by the surveying instrument (10) in the second coordinate frame (CF-2), and a new sub-set of control points containing the sub-set of control points and the at least one further control point is defined, the method further comprising:

- Computing a new pose and corresponding variances and covariances from the first coordinates and second coordinates of the new sub-set of control points,
- Computing a new layout area for the new sub-set of control points based on the new pose, the corresponding variances and covariances, the measuring accuracies ($\sigma_{HD}$, $\sigma_{HA}$), and the at least one predefined accuracy threshold, and
- Instructing the display to visualize a graphical representation of the new layout area.

7. Method of any one of claims 1 to 6, wherein the at least one accuracy threshold comprises at least a first accuracy threshold ($u_1$) and a second accuracy threshold ($u_2$) different from the first accuracy threshold ($u_1$) and in the step of computing the layout area, a first layout area (L-1) corresponding to the first accuracy threshold ($u_1$) and a second layout area (L-2) corresponding to the second accuracy threshold ($u_2$) are computed by the computer system (94).

8. Method of the previous claim 7, wherein a first graphical representation of the first layout area (L-1) is displayed, a second graphical representation of the second layout area (L-2) is displayed, or the first graphical representation of the first layout area (L-1) and the second graphical representation of the second layout area (L-2) are displayed.

9. A computer program comprising instructions, which, when executed by a computer system (94), cause the computer system (94) to carry out the method according to any one of claims 1 to 8.

10. An apparatus comprising means for carrying out the method according to any one of claims 1 to 8.

**FIG. 1**

**FIG. 2A**

FIG. 2B

**FIG. 3A**

**FIG. 3B**

S10    Computing a pose and corresponding variances and covariances for the station of the surveying instrument

S20    Computing a layout area based on the pose, the variances and covariances, measuring accuracies, and the accuracy threshold

S30    Instructing a display to visualize a graphical representation of the layout area

FIG. 4

**FIG. 5A**

**FIG. 5B**

**FIG. 6A**

**FIG. 6B**

**FIG. 7A**

**FIG. 7B**

**FIG. 8A**

**FIG. 8B**

FIG. 8C

LAY-2

FIG. 8D

**FIG. 8E**

**FIG. 8F**

**FIG. 8G**

LAY-4

**FIG. 8H**

POI

L-1

**FIG. 9A**

POI

L-2

**FIG. 9B**

POI

L-2     L-1

**FIG. 9C**

Europäisches
Patentamt

European
Patent Office

Office européen
des brevets

# EUROPEAN SEARCH REPORT

**Application Number**

EP 23 22 0884

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/276485 A1 (PETTERSSON BO [LU] ET AL) 28 September 2017 (2017-09-28) | 1,3,4,9,10 | INV. G01C15/00 |
| A | * paragraphs [0132], [0016], [0131]; figure 4A * | 2,5-8 | |
| X | US 2022/172406 A1 (MUELLER JOSEF [CH] ET AL) 2 June 2022 (2022-06-02) | 1,3,4,9,10 | |
| A | * paragraphs [0010], [0029], [0019]; figure 4 * | 2,5-8 | |
| A | US 2022/090910 A1 (MÜLLER JOSEF [CH] ET AL) 24 March 2022 (2022-03-24) | 1-10 | |
| A | WO 2011/141447 A1 (LEICA GEOSYSTEMS AG [CH]; METZLER BERNHARD [AT]) 17 November 2011 (2011-11-17) | 1-10 | |
| A | US 7 199 872 B2 (LEICA GEOSYSTEMS AG [CH]) 3 April 2007 (2007-04-03) | 1-10 | |

**TECHNICAL FIELDS SEARCHED (IPC)**

G01C

The present search report has been drawn up for all claims

| Place of search | Date of completion of the search | Examiner |
|---|---|---|
| The Hague | 31 May 2024 | Anastasiou, Ismini |

EPO FORM 1503 03.82 (P04C01)

## ANNEX TO THE EUROPEAN SEARCH REPORT
## ON EUROPEAN PATENT APPLICATION NO.

EP 23 22 0884

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2024

| Patent document cited in search report | Publication date | Patent family member(s) | | Publication date |
|---|---|---|---|---|
| US 2017276485 A1 | 28-09-2017 | CN | 107218933 A | 29-09-2017 |
| | | EP | 3222969 A1 | 27-09-2017 |
| | | US | 2017276485 A1 | 28-09-2017 |
| US 2022172406 A1 | 02-06-2022 | NONE | | |
| US 2022090910 A1 | 24-03-2022 | CN | 113056652 A | 29-06-2021 |
| | | CN | 114199216 A | 18-03-2022 |
| | | CN | 114199217 A | 18-03-2022 |
| | | EP | 3874229 A1 | 08-09-2021 |
| | | EP | 3978873 A1 | 06-04-2022 |
| | | EP | 3978874 A1 | 06-04-2022 |
| | | US | 2021372768 A1 | 02-12-2021 |
| | | US | 2022090910 A1 | 24-03-2022 |
| | | WO | 2020088768 A1 | 07-05-2020 |
| WO 2011141447 A1 | 17-11-2011 | AU | 2011252083 A1 | 04-10-2012 |
| | | CA | 2793979 A1 | 17-11-2011 |
| | | CN | 102834691 A | 19-12-2012 |
| | | EP | 2569596 A1 | 20-03-2013 |
| | | KR | 20130033374 A | 03-04-2013 |
| | | US | 2013050474 A1 | 28-02-2013 |
| | | WO | 2011141447 A1 | 17-11-2011 |
| US 7199872 B2 | 03-04-2007 | CA | 2482871 A1 | 18-11-2005 |
| | | JP | 2005331499 A | 02-12-2005 |
| | | US | 2007052951 A1 | 08-03-2007 |

EPO FORM P0459

For more details about this annex : see Official Journal of the European Patent Office, No. 12/82